Europäisches Patentamt

European Patent Office

Office européen des brevets

(19)

(11) Publication number : **0 442 854 A2**

(12) **EUROPEAN PATENT APPLICATION**

(21) Application number : 91830053.4

(22) Date of filing : 18.02.91

(51) Int. Cl.$^5$ : **G06F 15/16**

(30) Priority : 16.02.90 IT 4764690

(43) Date of publication of application :
21.08.91 Bulletin 91/34

(84) Designated Contracting States :
AT BE CH DE DK ES FR GB GR IT LI LU NL SE

(71) Applicant : F.A.S.E. S.p.A.
Corso Stati Uniti, 41
I-10129 Torino (IT)

(72) Inventor : Damaggio, Giovanni
Via Costantino Maes, 82
I-00162 - Roma (IT)
Inventor : Bollito, Domenico Virginio
Via Pio VII, 105
I-10127 - Torino (IT)

(74) Representative : Lanzoni, Luciano
c/o Bugnion S.p.A. Piazza del Re di Roma, 21
I-00183 Roma (IT)

(54) A network for handling data processed in parallel.

(57)   The network is located between one or more sources of data and information (S) and at least one user (U) in receipt of processed results, and comprises a plurality of processing modules (M) piloted by relative programs ; the modules are interconnected in parallel by at least one two-way bus (B) of which all the data and instruction channels can be accessed by each individual module through its own interface (I).

FIG.1

EP 0 442 854 A2

# A NETWORK FOR HANDLING DATA PROCESSED IN PARALLEL

The present invention relates to a network for handling data processed in parallel, comprising a plurality of processing modules interconnected in parallel by at least one conventional two way bus. It is well known that the problem of handling a flow of data processed in parallel becomes greater when operating with high volumes of data, notably as in the explication of sophisticated algorithms, for example visual display algorithms.

Such a problem is remedied by adopting either a processor for parallel data handling capable of operating at higher speed, hence higher and more costly technology, or a greater number of networked processors operating at lower speed.

The prior art embraces different types of network capable of remedying the problem in part.

A first conventional type of network is equipped with a plurality of processors interconnected in parallel and with a common random access memory.

A network structured in this manner eliminates data flow control, the processors instead having common access to data stored in the RAM which is available to all ; difficulties arise with access to the RAM, however, which cannot service all the processors at once, and in practice any such system requires a coordinating device by which the RAM is assigned to one processor or another at a given time.

Thus, a significant economic advantage is obtained by drastically reducing required storage capacity, though at a cost of rendering the bus unavailable to other processors seeking to access the RAM.

Accordingly, the need arises to queue the remaining processors waiting for the RAM, the effect of which is to reduce the operating speed of the system in no small measure.

A second type of network is referred to widely by the name "data flow" or "pipeline".

This second type of network is based on maintaining a rigid flow of data while allowing both parallel operations and differentiation of the jobs executed by each processor.

Unlike the first type of network mentioned, this affords a notable speed of processing by virtue of the fact that queueing is eliminated, though at the cost of a complex circuit structure which detracts from the flexibility of the system.

In short, the conventional networks thus outlined are suitable for certain low level algorithms, certain of which may also feature high degrees of refinement, though there are notable problems with the high level algorithms typically used in visual display operations.

Accordingly, the principal object of the present invention is to overcome the problems mentioned above and therefore to eliminate the corresponding drawbacks, through the provision of a network such as will handle large amounts of data transmitted and processed in parallel.

To advantage, the transmission and processing of large volumes of data are effected simultaneously between one processing module and another module, or between one processing module and several other processing modules, by exploiting the system of a plurality of processors used in multiprocessing mode, and operating with algorithms requiring only random access to data, rather than using data flow.

Furthermore, the modular design of the network disclosed renders the system notably flexible.

The stated object is realized, together with other objects that will emerge more clearly in the course of the description, in a network for handling data processed in parallel according to the invention, which is of the type located between one or more sources of data and information and one or more medium for utilization of the processed results, and comprises a plurality of processing modules with relative processing programs, interconnected in parallel by at least one two-way bus comprising a plurality of data and instruction channels all of which are accessible to each processing module.

The invention will now be described in detail, by way of example, with the aid of the accompanying drawings, in which :

- fig 1 provides a general diagram of the network according to the invention ;
- fig 2 provides a block diagram of each module in a network according to the invention ;
- fig 3 is a block diagram displaying the structure of the interface denoted I in fig 2.

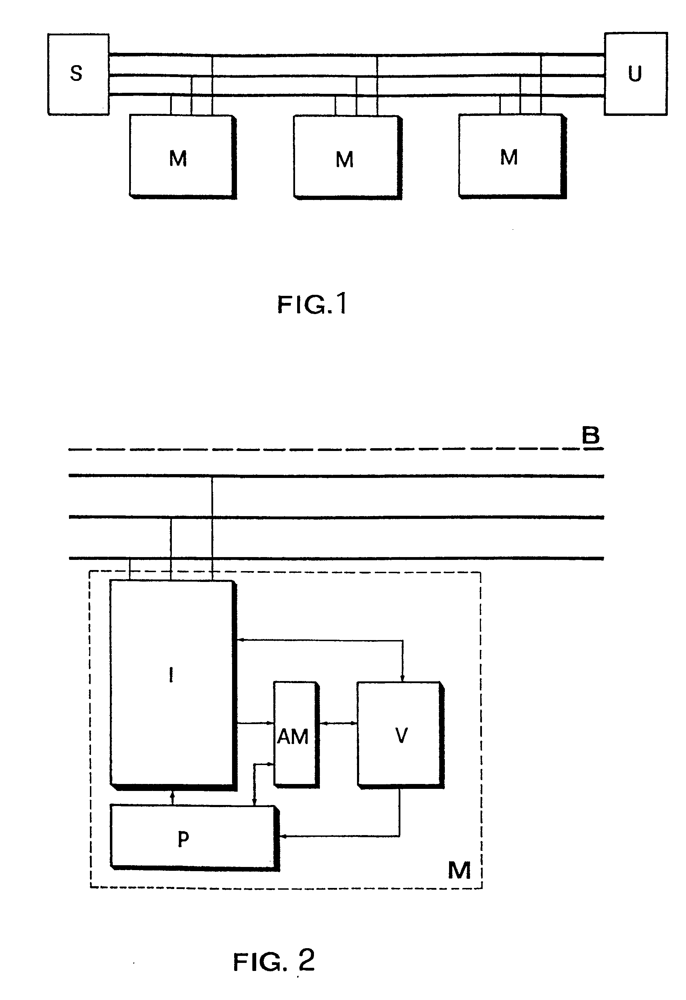

With reference to fig 1 of the drawings, S denotes a source of data and information and U denotes a means of utilizing the results processed from such data and information. Whilst S seemingly denotes a single source in fig 1, the block might in practice and indeed would in effect consist in one or more distinct data and information sources, perhaps of dissimilar nature, such as a television camera, a Random Access Memory, a further module or CPU, etc.

The block denoted U represents one or more users able to exploit the results processed from the source data and information, which might consist likewise in distinct devices of dissimilar nature, e.g. further CPUs, VDUs or printers, automatic machines and so forth.

According to the invention, the network comprises a plurality of processing modules M located between the data/information source S and the user U, which are interconnected in parallel by a two-way bus B. The bus comprises a plurality of channels conveying data and instructions, all of which are accessible to each processing module M.

Each single processing module M (fig 2) consists in at least one processor P, one or more random access memories V, an interface I through which the module communicates with the bus B, and an arbiter device denoted AM controlling the communications between the processor P, the random access memory V and the interface I.

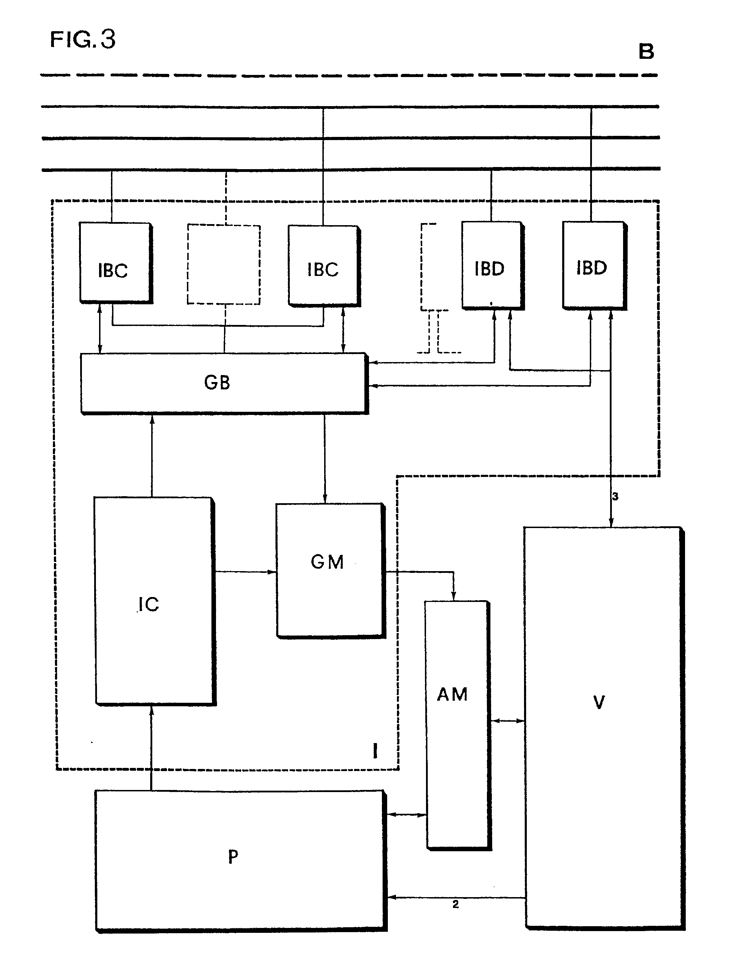

As shown in fig 3, the interface I, which connects the data/instruction channels with the processor P and the memory M, comprises a command interpreter device IC by which commands from the processor P are converted and transferred to the interface I.

The purpose of such a device IC is to dialogue with the processor P and to convert its commands into a succession of logic signals that are directed, as appropriate, by way of a memory control device GM to the memory V, and by way of a bus control device GB to the two-way bus B.

Such commands may include, for example, the direct address from which the receipt or input of data commences, the number of the bus data/instruction channel to interface, i.e. the number of the single line of the bus B to or from which to transmit or receive, or the number of records to be transmitted or received.

To reiterate, the commands in question are directed by the interpreter IC to the inputs of the memory control device GM and of the bus control device GB.

The memory control device GM generates commands for transmission to the memory V by way of the arbiter device AM, in such a way that the RAM can receive or send data. More exactly, the memory control device GM is an address and control generator for the random access memory V.

The generating of addresses occurs on the basis of the commands transmitted by the processor P.

Both the processor command interpreter device IC and the memory control device GM are connected to the bus control device GB, which is connected in its turn to a plurality of bus control interface blocks IBC and a plurality of bus data interface blocks IBD.

The pluralities of interface blocks IBC and IBD correspond in number one to the other and both to the plurality of channels afforded by the bus B, and function respectively as routes through which to direct the control signals and serial data relative to each processing module M.

The control and data interface blocks IBC and IBD serve, on the basis of selection, to direct control signals and data signals from and to the bus B in the appropriate direction, i.e. input or output.

The control blocks IBC and the data blocks IBD are activated one at a time, and more exactly, the data interface block IBD activated is that corresponding to the control interface block IBC activated at any given moment.

The bus control device GB thus serves to select the appropriate control and data interfaces IBC and IBD and thereupon to generate internal control signals for transmission to the bus B, when the processing module M operates in output mode, or to distribute such signals according to the control signals received from the bus channel selected. The bus control device GB serves additionally to generate control signals for the memory control device GM.

Thus, the memory V can transmit serial data, for example to a VDU, or receive data from a VDU, as well as being random-accessed by the processor P.

The processors P are able to exchange control and co-ordination information through a dedicated line, as determined by a network control and operating program, whilst data in processing and addresses are directed through the two-way bus B by way of the data interface blocks IBD, which are connected with the random access memory V through a direct two-way link.

In the event of an output operation taking place, the processor P supplies commands to the command interpreter IC, containing the address of the data to be accessed. These commands are directed both into the memory control device GM and into the bus control device GB. The memory control device GM supplies the memory V both with the address and with the relative update, by way of the arbiter device AM. Each time access is requested by the memory control device GM, i.e. occasionally, only when writing or reading a new item of data, the arbiter device AM will isolate the processor P momentarily on receipt of the request and allow the memory control device GM to effect the operation, that is, to update the address stored by the RAM.

This accomplished, the arbiter AM restores the connection between processor P and memory V in such a way that the processor can resume operation while data is transmitted.

In effect, the processor P and the memory control device GM compete for access to the memory V only in respect of control and address signals, whereas data is carried by a different route. The memory V releases data to the processor P in parallel by way of a line denoted 2, whilst serial data is released to the bus B through a line denoted 3 (fig 3).

As records are being transmitted, the bus control device GB proceeds both to relay selected pulses through the bus B, which other processors P utilize for synchronization purposes, and to transmit a control signal to the memory control device GM for a further address update cycle.

In the event that an input operation is in progress and the bus B is assigned to other processors P, the bus control device GB relays instructions to the memory control device GM in order to enable an address update cycle through the intervention of the arbiter device AM.

The transmission of data or instructions through the two-way bus B can occur by one of two methods.

In one type of transmission, known conventionally as block transfer, a significantly large number of blocks of information can be transferred from one location to another simultaneously.

The second type of transmission in question is that whereby blocks of information are broadcast from one processing module M to all of the remaining modules M.

For example, the image from a video source might be transferred to a memory bank V of each processing module M, while one processor P calculating the gradient passes a list of information to another processor P, for example a list of points used by the latter to follow contours.

Thus, the stated objects are realized according to the invention. In fact, a network is created for handling data processed in parallel whereby data can be operated on independently by each processor and transferred to all the remaining processors, thus exploiting the advantages of multiprocessing, and with a notably flexible circuit structure.

## Claims

**1)** A network for handling data processed in parallel, characterized
in that it is located between at least one source of data and information (S) and at least one user (U) in receipt of the results processed from such data and information, and comprises a plurality of processing modules (M) with respective programs, interconnected in parallel by at least one two-way bus (B) consisting in a plurality of data and instruction channels all of which are accessible to each processing module (M).

**2)** A network as in claim 1, wherein each processing module (M) comprises at least one processor (P) and at least one random access memory (V), both of which connected with the two-way bus (B) through an interface block (I) and interconnected together with the interface block (I) by an arbiter device (AM) governing access to the memory (V).

**3)** A network as in claim 2, wherein the interface block (I) comprises a memory control device (GM) connected to the random access memory (V), a bus control device (GB), and a device (IC) of which the purpose is to interpret commands emitted by the processor (P) and transmitted selectively to the memory control device (GM), by way of the arbiter device (AM), and to the bus control device (GB).

**4)** A network as in claim 1 and claim 3, wherein the bus control device (GB) is connected in parallel to a plurality of control interface blocks (IBC) and to a plurality of data interface blocks (IBD), corresponding in number one plurality to the other and both pluralities to the plurality of channels of the bus (B), through which respectively to route control signals and serial data.

**5)** A network as in claim 2, wherein the processors (P) of the various modules (M) are interconnected by a line (L) carrying commands and information relating to control and co-ordination of the processing operations of each module (M) in accordance with a program for control and operation of the network.

## FIG.1

## FIG. 2

# FIG. 3

B